Europäisches Patentamt

European Patent Office

Office européen des brevets

(19)

(11) **EP 0 625 964 B1**

(12) **EUROPÄISCHE PATENTSCHRIFT**

(45) Veröffentlichungstag und Bekanntmachung des Hinweises auf die Patenterteilung:
**23.07.1997 Patentblatt 1997/30**

(51) Int Cl.6: **C04B 35/583**, C04B 35/58, C01B 21/064, B01J 3/06

(21) Anmeldenummer: **93903940.0**

(22) Anmeldetag: **09.02.1993**

(86) Internationale Anmeldenummer:
**PCT/EP93/00314**

(87) Internationale Veröffentlichungsnummer:
**WO 93/16015 (19.08.1993 Gazette 1993/20)**

(54) **VERFAHREN ZUR HERSTELLUNG EINES AMORPHEN ULTRAHARTEN MATERIALS AUF BASIS VON BORNITRID**

PROCESS FOR PREPARING AN AMORPHOUS, EXTRA-HARD MATERIAL BASED ON BORON NITRIDE

PROCEDE POUR PREPARER UN MATERIAU EXTRA-DUR AMORPHE A BASE DE NITRURE DE BORE

(84) Benannte Vertragsstaaten:
**AT BE CH DE ES FR GB IE IT LI NL SE**

(30) Priorität: **12.02.1992 DE 4204009**

(43) Veröffentlichungstag der Anmeldung:
**30.11.1994 Patentblatt 1994/48**

(73) Patentinhaber: **FIRMA SIEGFRIED GOLZ**
**D-53940 Hellenthal (DE)**

(72) Erfinder: **WILDENBURG, Jörg**
**D-53940 Blumenthal (DE)**

(74) Vertreter: **Müller-Gerbes, Margot, Dipl.-Ing.**
**Friedrich-Breuer-Strasse 112**
**53225 Bonn (DE)**

(56) Entgegenhaltungen:
WO-A-90/02704          FR-A- 2 495 597
FR-A- 2 516 067

- **JOURNAL OF MATERIALS SCIENCE LETTERS Bd. 7, Nr. 1, Januar 1988, Seiten 23 - 24 LORENZ ET AL 'Influence of MgO on the growth of cubic boron nitride using catalyst Mg3N2'**
- **DATABASE WPI Week 7716, Derwent Publications Ltd., London, GB; AN 77-28330Y**
- **PATENT ABSTRACTS OF JAPAN vol. 15, no. 181 (C-830)9. Mai 1991**
- **JOURNAL OF CRYSTAL GROWTH Bd. 112, 1991, Seiten 386 - 401 BINDAL & AL. 'Synthesis of cubic boron nitride using magnesium as the catalyst'**

## Beschreibung

Die Erfindung betrifft ein Verfahren zum Herstellen eines amorphen ultraharten Materials auf Basis von Bornitrid, ausgehend von hexagonalem oder turbostratischem Bornitrid, das bei Drucken von mindestens 70 kbar oder mehr komprimiert und auf Temperaturen von mindestens 1650 °C oder darüber erwärmt wird, bis eine Bornitridschmelze erhalten wird und die gebildete Bornitridschmelze durch Abstellen der Wärmezufuhr abgeschreckt wird und danach die Druckentlastung der abgeschreckten Bornitridschmelze durchgeführt wird.

Ein gattungsgemäßen Verfahren zum Herstellen von ultrahartem elektronen- und röntgenstrahlamorphem Bornitrid, das als aBN-2 bezeichnet wird, mit einer zum Ritzen von Diamant ausreichenden Härte ist aus der WO 90/02704 und der DE-PS 38 30 840 bekannt.

Für den Prozeß der Herstellung von Einzelkristallen oder gesinterten Körpern von kubischem Bornitrid werden in der Industrie erfolgreich Verfahren eingesetzt, bei denen das Ausgangsmaterial hexagonales oder pyrolytisches Bornitrid unter Zugabe von Kristallisationskatalysatoren und Lösungsmittelkatalysatoren mit hoher Umwandlungsrate in kubisches Bornitrid oder wurtzitisches Bornitrid übergeführt wird. Hierzu wird beispielsweise auf die US 4361 543, US 3192 015, US 3233 988 und US 4188 194 verwiesen.

Entscheidend bei diesem Prozeß ist der Einfluß der Katalysatoren auf die Neubildung eines kristallinen Bornitrids höherer Härte und hoher Temperaturfestigkeit als das Ausgangsmaterial.

Bekannt sind drei kristalline Strukturen des Bornitrids: eine weiche hexagonale Form, auch als weißer Graphit bezeichnet, das hexagonale Bornitrid hBN; eine harte hexagonale wurtzitische Form ähnlich der hexagonalen Diamantstruktur, das sogenannte wurtzitische Bornitrid wBN sowie eine kubische Zinkblendeform, die von der Struktur dem kubischen Diamant gleicht und als kubisches Bornitrid cBN bezeichnet wird. In der beigefügten Zeichnung ist in der Figur 1 das Kristallgitter bzw. die Kristallgitterschichten des hexagonalen Bornitrids hBN dargestellt, in der Figur 2 die wurtzitische Kristallgitterstruktur des wBN und in der Figur 3 die Kristallgitterstruktur des kubischen Bornitrids cBN.

Alle drei Modifikationen des Bornitrids werden in der Industrie als Pulver oder Sinterkörper verwendet, einmal als Rohstoff für Synthesen, zum anderen als abrasives Korn zur Verwendung in Werkzeugen. Weiterhin finden Sinterkörper aus cBN Verwendung als Wärmesenke in der Mikroelektronik.

Bei den harten Bornitridphasen, die zu kompakten Sinterkörpern verarbeitet werden, unterscheidet man zwischen Typen mit einer Selbstbindung der Körner oder einer Bindung mit Hilfe eines separaten Bindemittels zwischen den Bornitridkörnern. Beide Typen wurden bishin zu porenfreien Sinterkompaktkörpern hergestellt. Auf Grund der Vermischung mit weniger harten Substanzen ist der zuletzt genannte Typ jedoch weniger für den Einsatz in Werkzeugen brauchbar.

Auch der direkte Umsetzungsprozeß von hBN zu cBN oder wBN ist durchführbar, siehe zum Beispiel die japanischen Patente 49/27518, 49/30357, 49/22925 und US-Patent 3852 078 unter anderem, wobei mit Drucken in einem Bereich über 50 kgbar und bei Temperaturen von 1100 bis 3000°C gearbeitet wird.

Bei der Herstellung von kubischem Bornitrid wurde festgestellt, daß Sauerstoffverunreinigungen das Wachstum von kubischen Bornitridkristallen behindern, siehe Journal of Materials Science, Lett. Bd. 7, Nr. 1, Jan. 88, Seite 24 und Journal of Crystal Growth 112 (1991) 386-401. Zur Vermeidung von Störungen des Kristallwachstums werden deshalb bei der Herstellung von kubischem Bornitrid sogenannte Sauerstoffänger (oxygengetter) eingesetzt.

Außer den kristallinen Formen des Bornitrids existieren mindestens zwei amorphe Formen verschiedener Härte. Die erste amorphe Form wird als aBN-1 oder pBN, was für pyrolytisches Bornitrid steht, bezeichnet. Das aBNI oder pBN genannte amorphe Bornitrid ist weich wie hBN, siehe zum Beispiel japanische OS 62-263962, und wird ohne Druck in einem CVD-Verfahren erzeugt. Die zweite amorphe Form des Bornitrids wird als aBN-2 bezeichnet und zeichnet sich durch extrem hohe Härte aus, so daß es in der Lage ist, Diamant auch in der (111)-Richtung zu ritzen, bohren und fräsen und zeichnet sich auch durch hohe Temperaturfestigkeit bis über 1450 °C aus. Derartig ultrahartes amorphes Bornitrid aBN-2 wird erstamlig in der DE-PS 38 30 840 beschrieben. Bezüglich des aBN-1 (pBN) ist umstritten, siehe US-PS 4188 194, ob nicht doch eine gewissen Ordnung in der Kristallstruktur vorhanden ist, da Bor- und Stickstoffatome ähnlich dem Graphitgitter des hBN auf bestimmten Ebenen bevorzugt verbunden sind. Diese Ebenen sind jedoch dreidimensional nicht periodisch verknüpft.

Die industriell wichtigen Prozesse der Herstellung der harten Bornitridphasen laufen alle bei hohen Drucken und Temperaturen ab, da eine zwingende äußere Krafteinwirkung und eine zugeführte thermische Energie notwendig sind, um einen Platzwechsel der Atome im Gitter der Ausgangsstoffe zu induzieren und so zu einer neuen dichteren Struktur zu gelangen. Werden dem Bornitrid jedoch Stoffe mit besonderen katalytischen Effekten zugeführt, so wird die Umwandlung in eine bestimmte Strukturform vorgegeben, wenn bei genügend hohen Drucken und Temperaturen gearbeitet wird.

Der Erfindung liegt die Aufgabe zugrunde, ein weiteres Verfahren zum Herstellen von amorphem ultrahartem Bornitrid zu schaffen, bei dem die Ausbeute gesteigert und/oder die erzielbaren Korngrößen amorpher Bornitrid-Körner gesteigert werden können.

Die Erfindung löst die gestellte Aufgabe bei dem gattungsgemäßen Verfahren dadurch, daß das Ausgangsmaterial, nämlich hexagonales Bornitrid oder turbostratisches Bornitrid in Gegenwart von Kristallisationsinhibitoren behandelt wird, d.h. komprimiert erwärmt und nachfolgend abgeschreckt wird. Erfindungsgemäß werden Kristallisationinhibitoren benutzt, die unter Freigabe von Ionen oder Molekülen mit dem hexagonalen oder turbostratischen Bornitrid bei Drucken von mindestens 70 kbar und Temperaturen von mindestens 1650 °C reagieren und deren Reaktionsprodukte in die Kristallstruktur, d.h. die Kristallschichtstrukturen des hBN dabei eingebaut oder eingelagert werden. Bei Abschreckung der so veränderten Bornitridschmelze wird eine glasartige ultraharte Substanz auf Basis Bornitrid erhalten, die amorph ist, und zwar elektronenstrahl- und röntgenamorph ist. Diese neue Stubstanz ist in der Lage, Diamant auch in der (111)-Richtung zu ritzen. Das erfindungsgemäße Verfahren der Zugabe von Kristallisationsinhibitoren bei dem Herstellungsprozeß eines ultraharten amorphen Materials auf Basis von Bornitrid, als amorphes Bornitrid aBN-2 bezeichnet, beeinflußt den Umwandlungsprozeß von hexagonalem BN in amorphes aBN-2 positiv, so daß der Prozentanteil an umgesetztem und aus dem Prozess erhältlichem ultrahartem amorphem Bornitrid deutlich steigt. Auch die Korngröße sowie die Abwesenheit innerer Spannungen der erhaltenen ultraharten aBN-2-Körner sind gesteigert.

Die übliche Methode, um ein Glas, also ein amorphes Material , zu erhalten, ist die sogenannte Schmelzabschrekkung. Wenn ein zur Glasbildung geeignetes Material , wie $B_2O_3$, zu einer ausreichend hohen Temperatur erhitzt wird, schmilzt es und wenn es hinreichend schnell abgekühlt wird, bleibt es ein Glas. Es gibt viele andere Wege, durch die ein Material amorphisiert werden kann. In manchen Fällen kann dasselbe Material durch mehr wie eine Prozedur in ein amorphes Stadium überführt werden. Amorphe Substanz, die durch verschiedene Wege erhalten wurde, zeigt substantiell unterschiedliche physikalische Eigenschaften. Durch den Einsatz von Druck während der Glasbildung und durch unterschiedliche Abkühlraten können Gläser mit völlig unterschiedlichen physikalischen Eigenschaften erhalten werden. Fraglich ist, ob all diese Formen als identisch angesehen werden können mit Ausnahme der chemischen Zusammensetzung. Eher sind sie Analoge zu den polymorphen Modifikationen im kristallinen Zustand.

Wenn das Volumen auf Werte nahe dem einer kristallinen Substanz abnimmt, sinkt auch die Volumenschwundrate und das Verhalten der Volumenänderung kommt praktisch einer kristallinen Substanz gleich. Der Austritt aus einer schmelzähnlichen Verhaltensweise im Unterkühlungsbereich unterhalb der eigentlichen Schmelztemperatur hängt deutlich von der Abkühlungsrate ab. Je langsamer die Abkühlung verläuft, desto geringer ist das Glasvolumen. Die Austrittstemperatur wird auch Glas-Übergangstemperatur genannt. Zusammen mit dem Volumenschwund geht eine enorme Steigerung der Glasviskosität einher. Am Glasbildungspunkt liegt die Scher-Schmelzviskosität bei $10^{13}$ Poise. Wird auf die Schmelze von außen zusätzlich ein enormer Druck aufgebracht und diese dann zuerst abgeschreckt und folgend druckentlastet, so wird eine spezielle Anordnung der Atome erreicht, die nicht dem Gleichgewichtszustand entspricht.

Ein Material wie BN, welches sehr dichte Strukturen bildet, kann erfindungsgemäß in ein Glas mit völlig neuen physikalischen Eigenschaften überführt werden. Die erfindungsgemäß eingesetzten additiven Hilfsstoffe in Gestalt der Kristallisationsinhibitoren stabilisieren die amorphe Struktur und verhindern eine spontane Rekristallisation. Der Massenanteil der Additive kann mit der Art des verwendeten Hilfsstoffs von wenigen ppm bis einigen % schwanken.

Erfindungsgemäß werden als Kristallisationsinhibitoren chemische Substanzen eingesetzt, bevorzugt Sauerstoff abgebende chemische Substanzen, sogenannte Sauerstoffdonatoren, die gerade den Prozeß der Kristallisation von hexagonalem Bornitrid oder kubischem Bornitrid unterbinden und ein Bornitrid von amorpher Form, das bei Raumtemperatur und Normaldruck metastabil wie Diamant ist und eine entsprechende Härte aufweist, erzeugen. Erfindungsgemäß wird der Prozeß zur Erzeugung einer kubischen kristallinen Bornitridphase aus hexagonalem Bornitrid umgekehrt und durch Einsatz von Kristallisationsinhibitoren zur Synthese eines amorphen ultraharten Materials auf Basis eines Bornitrids vom Typ aBN-2 benutzt. Das Ausgangsmaterials is hierbei hexagonales Bornitrid.

Vorteilhafte Weiterbildungen des erfindungsgemäßen Verfahren zum Herstellen von ultrahartem amorphem Bornitrid sind den kennzeichnenden Merkmalen der Unteransprüche entnehmbar und werden nachfolgend näher erläutert.

Eine weitere Verbesserung des erfindungsgemäßen Verfahrens konnte im Zusammenhang mit dem Einbringen von Kristallisationsinhibitoren in die Bornitridsynthesekammer erzielt werden, und zwar in bezug auf eine optimale Plazierung der Synthesesubstanzen, insbesondere des hBN und der Kristallisationsinhibitoren zueinander im Reaktionsraum sowie die Ausarbeitung ausreichend wirksamer Konzentrationen an Kristallisationsinhibitoren. Zum Durchführen des erfindungsgemäßen Verfahrens kann ein Aufbau der Vorrichtung, wie er in der WO/90/02704 beschrieben ist, eingesetzt werden, dies betrifft insbesondere den Aufbau und Einbau der inneren Reaktionskammer, d.h. den Aufbau des Hochdruckeinsatzes, enthaltend die für die Herstellung des ultraharten amorphen Bornitrids einzusetzenden Materialien. Erfindungsgemäß wurde der Aufbau der Reaktionskammer, d.h. der Aufbau des Hochdruckeinsatzes bezüglich der Abschirmung gegenüber der Heizung und im Hinblick auf einen Stofftransport der Kristallisationsinhibitoren gegenüber dem Bekannten geändert. Insbesondere wurde die Wärmeeinstrahlung von der Heizung zur Synthesemasse hin, d.h. dem aufzuschmelzenden Bornitrid verbessert und des weiteren eine gezielte Plazierung der Kristallisationsinhibitoren gefunden, wodurch die Umsatzraten der Umwandlung von hBN in aBN-2 verbessert wird. Eine wesentliche Verbesserung des Verfahrens wird durch die Vorkompaktierung des hexagonalen Bornitrids als Ausgangsmaterial erreicht. Eine derartige Vorkompaktierung wird beispielsweise in der Weise erzielt, daß das Ausgangsmaterial, z.B. hBN, das wie der Graphit in Form von schicht- oder plättchenartigen Kristallen vorliegt unter Verwendung einer dispersiven Flüssigkeit angerührt und dann in einer Presse vorkompaktiert wird. Mit diesem vorkompaktierten Ausgangsmaterial wird später beim Pressen der Synthesemasse in der Reaktionskammer unter Anwendung der hohen Drücke und Temperaturen eine Orientierung des hexagonalen Bornitrids in Plättchenform erreicht, die sich positiv auf die strukturelle und chemische Umsetzung mit den Kristallisationsinhibitoren auswirkt. Die durch die Vorkompaktierung erzeugten hBN-Plättchen besitzen naturgemäß bis zum einem axialen Druck von ca. 40 kbar eine hohe Gleitfähigkeit aufeinander und orientieren sich zu ca. 90 % in Stapelform mit den Gleitflächen (0001) senkrecht zur Hauptdruckachse. Bei der beim erfindungsgemäßen Verfahren verwendeten Hochdruckapparatur tritt dann bei über 40 kbar eine zunehmende seitliche Druckunterstützung in dem Reaktionsraum auf, die eine Verteilung der hBN-Plättchen zur Form zweier Konen, die mit den Spitzen gegeneinander stehen, ergibt.

Die derartig durch das vorkompaktierte hBN eingeregelten, orientierten hBN-Kristalle können nun bei Temperaturerhöhung nur Bindungen in bestimmten räumlichen Richtungen, bevorzugt (0001) Richtung eingehen, da nur in diesen Richtungen die Atome der Nachbarkristalle nahe genug sind, um miteinander eine Bindung einzugehen. Läßt man nun erfindungsgemäß entlang der Gleitflächen (0001) der hBN-Kristalle von geeigneter Position im Reaktionsraum ein starkes Oxidationsmittel einwirken, zum Beispiel Sauerstoff abgebende chemische Substanzen, die als Kristallisationsinhibitoren eingesetzt werden, die ab einer Temperatur von 1250 °C wirksam werden, so dringt der abgegebene Sauerstoff in die hBN-Plättchen ein und vernetzt diese auch über die Bildung eines Borsuboxids ($B_2O_{3-x}$), wobei x von 0 bis 2,$\bar{9}$ bedeuten kann. Dieses Borsuboxid baut sich mit großer Wahrscheinlichkeit in die jetzt parallel zur Druckachse liegenden hexagonalen Kanäle des Bornitrids ein.

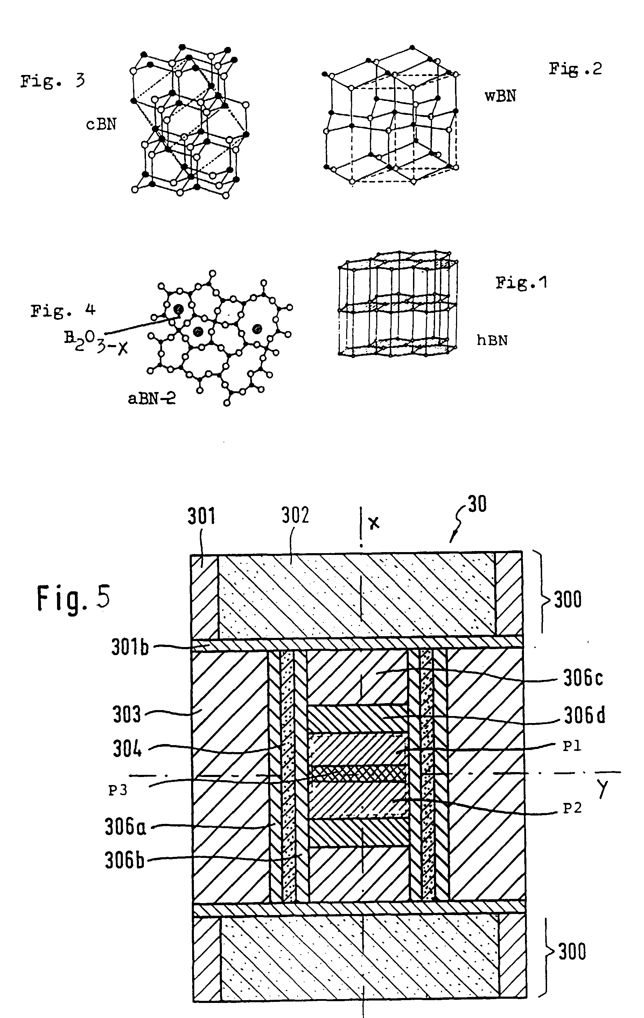

Bedingt durch den hohen Druck und die hohe Temperatur bei der Synthese des Herstellens von amorphem ultrahartem Bornitrid aus hexagonalem Bornitrid vernetzen aber auch die B- und N-Atome der hBN-Schichten untereinander und lösen die hexagonale Kristallstruktur langsam auf. Es bildet sich erfindungsgemäß ein neues Netzwerk, wie es in der Figur 4 der Zeichnung dargestellt ist, welches infolge der Anwesenheit des Borsuboxids nicht unter Druck in die kubische Form des Bornitrids übergeht, sondern als Verbund dreidimensional statitisch angeordneter Atome, bedingt durch die hohe Herstellungstemperatur und die nachfolgende Abschreckung unter Druck, bestehen bleibt. Wird dieser Zustand durch abrupte Temperaturerniedrigung erfindungsgemäß gleichsam eingefroren, so erhält man als Synthese-Endprodukt das gewünschte ultraharte Material auf Basis von amorphem aBN-2. Die Umwandlungsrate ist abhängig von der Temperaturgradientenverteilung in der Reaktionskammer und sie reagiert auch auf den prozentualen Anteil des Kristallisationsinhibitors, der auch lokal in der Reaktionskammer schwanken kann.

Für die Vorkompaktierung des hexagonalen Bornitrids für die nachfolgende Synthese und Umwandlung werden bevorzugt Lösungsmittelkatalysatoren eingesetzt.

Im Fall von Wasser $H_2O$, destilliert, als Lösungsmittelkatalysator wird das hBN schon bei geringen Mengen Wasserzugabe ähnlich einem hydrothermalen Syntheseprozess oberflächlich angelöst. Es bildet sich Ammoniumpentaborat-Tetrahydrat, welches ebenfalls amorph vorliegt und gleich einem Flußmittel die weitere Auflösung des hBN beschleunigt. Druck und Temperatur bedingen einen starken Lösungseffekt des Wassers, welches nicht verdampfen kann, auf die kristalline Struktur der eingebrachten Substanzen und sorgen für hohen Stofftransport im Syntheseraum. Durch den Einfluß des Wassers oder auch adsorbierter Feuchtigkeit können die Kristallisationinhibitoren an die vorgesehenen Stellen gebracht werden.

Variiert man den prozentualen Anteil an Kristallisationinhibitor und Lösungsmittelkatalysator stufenweise oder zonenweise, so erhält man fließende Übergänge von der cBN zur aBN-2 Struktur. In der Literatur zum Bornitrid ist immer wieder auf den schädlichen Einfluß des Sauerstoffs bei der cBN-Synthese hingewiesen worden, siehe beispielsweise die Untersuchungen von Tadaosato, Hideohiraoka, Tadashiendo, Osamofukunago, Minoruivata "Effect of oxygene on the gross of cubic boron nitride using MG3 as catalyst" in Journal of Materials Science 16 (1981) 29-1834.

Erst mit der Erfindung gelingt es, den Einfluß von Sauerstoff als Kristallisationsinhibitor zum Herstellen von ultrahartem amorphem Bornitrid zu erkennen und praktisch zur Herstellung desselben zu nutzen. Erfindungsgemäß wird nämlich die durch die Einlagerung von Reaktionsprodukten, wie hier bei Sauerstoffdonatoren als Kristallisationsinhibitoren, scheinbar räumlich zu dicht gewordene atomare Anordnung in der Kristallstruktur des hBN verändert, indem sie sich konzentrisch auszudehnen beginnt, wobei der aufgebrachte äußere Druck in der Reaktionskammer jedoch ein Ausweichen auf beliebiges Volumen unterbindet. Hierbei bildet sich erfindungsgemäß die amorphe ultraharte Phase aBN-2.

Bei dem erfindungsgemäßen Verfahren kann auch der Druck während der Synthese und Umwandlung als variabler Parameter bei hoher Temperatur benutzt werden. Während für die Erzeugung von kubischen Bornitridkristallen ein exakt einzustellender Druck unbedingt nötig ist, um eine gute Kristallqualität zu erzeugen, kann bei dem erfindungsgemäßen Verfahren der Druck bei Temperaturerhöhung steigen, um im Phasensystem des Bornitrids die Reaktion in eine Richtung zu bewegen. Aus diesem Grund wird die Druck- und Temperatursteuerung erfindungsgemäß unabhängig voneinander geregelt.

Das erfindungsgemäße Verfahren kann auch mit turbostratischem Bornitrid als Ausgangsmaterial anstelle von hBN mit Erfolg zum Erzeugen von ultrahartem aBN-2 durchgeführt werden. Der Mechanismus der dreidimensionalen Verknüpfung verläuft dann symmetrisch anders. Die Verknüpfung verläuft nicht mehr in Richtung der geschichteten Plättchen von hBN, sondern entlang der Korngrenzen der verwirbelten Kristallgitterstrukturen des turbostratischen Bornitrids. Das hexagonale Bornitrid ist jedoch wegen seiner Schichtstruktur des Kristallgitters bevorzugtes Ausgangsmaterial für die Erfindung.

Erfindungsgemäßes amorphes ultrahartes Material auf Basis von Bornitrid zeichnet sich gemäß den Merkmalen der Ansprüche 16 bis 18 aus. Es ist nach dem erfindungsgemäß erläuterten Verfahren herstellbar.

Der Einsatz der Lösungsmittelkatalysatoren ermöglicht die vollständige Auflösung der Kristallgitter-Struktur des eingesetzten Bornitrids. Der Inhibitor verhindert durch seine statische Verteilung eine allgemeine Rückumwandlung in eine der kristallinen Modifikationen des Bornitrides. Deshalb findet man aBN-2 nicht in der Nähe des Pyrophyllits, da dieses ein Anwachsmuster für Kristallkeime bietet.

Nachfolgend wird das erfindungsgemäße Verfahren anhand von Beispielen in Verbindung mit einer Zeichnung erläutert. Die zum Herstellen des amorphen ultraharten Bornitrids gemäß dem erfindungsgemäßen Verfahren benutzte Vorrichtung entspricht einer wie in der WO90/02704 beschriebenen Vorrichtung.

Hierbei zeigen

Figuren 1 bis 3          verschiedene Kristallgitterstrukturen von Bornitrid.

Figur 4          Struktur des erfindungsgemäß hergestellten amorphen Bornitrids aBN-2

Figur 5          Aufbau eines Hochdruckeinsatzes im Querschnitt

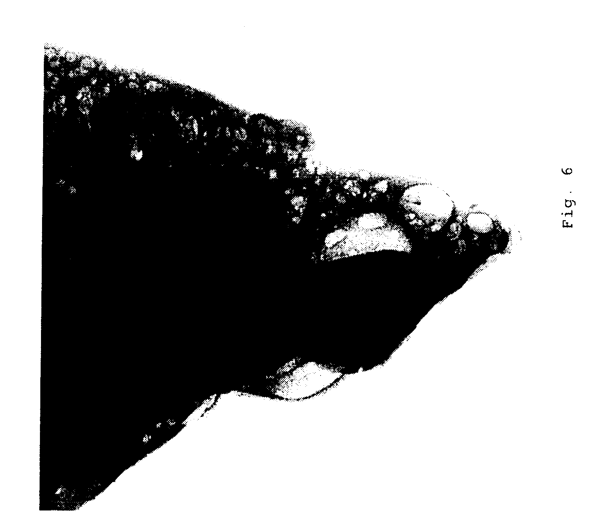

Figur 6          eine TEM-Aufnahme von erfindungsgemäß hergestelltem amorphem Bornitrid aBN-2

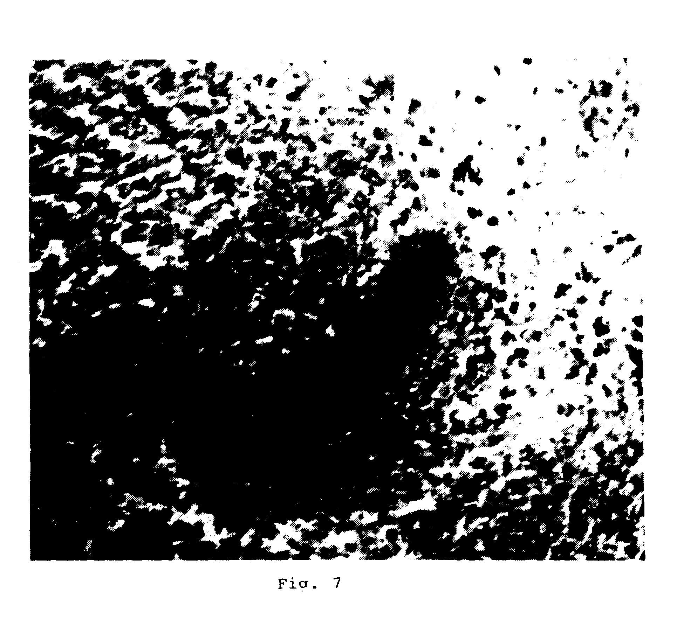

Figur 7          eine lichtmikroskopische Aufnahme von erfindungsgemäß hergestelltem amorphem Bornitrid aBN-2

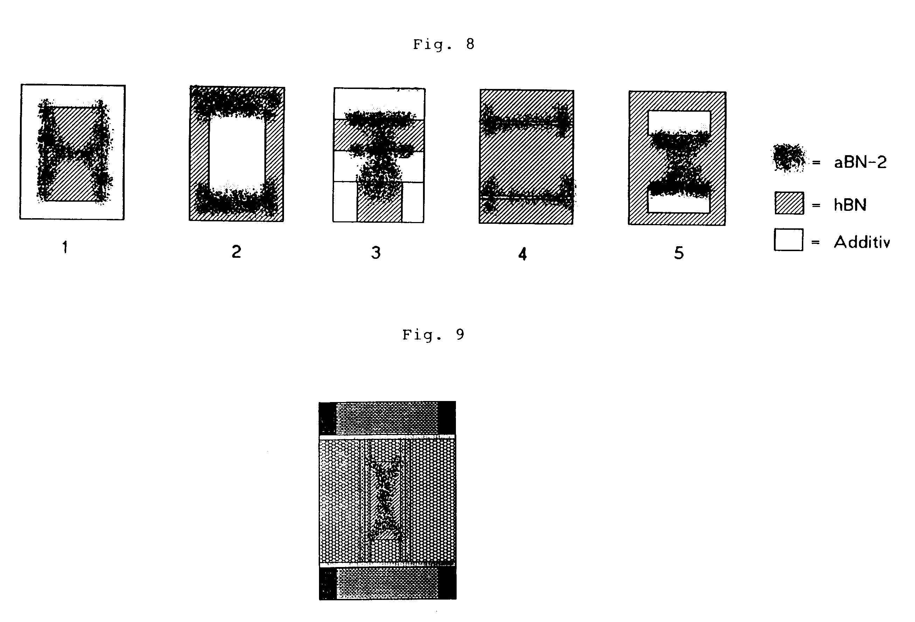

Figur 8a-d, Figur 9          verschiedene Einbaugeometrien für die Ausgangsmaterialien in dem Hochdruckeinsatz in schematischer Darstellung.

Beispiel 1:

Handelsüblich erhältliches hexagonales Bornitrid hBN, Grade C, spezial nachgewaschen, wurde mit wasserfreiem Aceton vermischt und in einer Handpresse zu zwei Pillen P1, P2 von je 3 mm Höhe und 3 mm Durchmesser vorkompaktiert, beispielsweise mit einer Preßkraft von 5 Tonnen.

Reines Magnesiumnitrid $Mg_3N_2$ wurde mit 1 Volumen-% Kaliumpermanganat ($KMnO_4$) versetzt und in einem Achatmörser fein vermahlen. Sodann wurde hieraus wie vorangehend eine Pille P3 von 0,5 mm Höhe und 3 mm Durchmesser in einer Handpresse gepreßt. Die drei Pillen wurden sodann in Sandwich-Anordnung, siehe Figur 5, in den Hochdruckeinsatz 30 für die Hochdruckpresse eingesetzt. Der Hochdruckeinsatz 30 gemäß Figur 5 setzt sich aus zylindrisch angeordnetem Pyrophyllit, Graphit, Korund, Molybdän und Stahlteilen zusammen. Der Hochdruckeinsatz 30 ist ebenfalls zylindrisch und um seine Längsachse X rotationssymmetrisch und zu seiner Querachse Y spiegelsymmetrisch aufgebaut. Im Zentrum sitzen die drei Pillen P1, P3, P2 sandwichartig aufeinander. Die drei Pillen sitzen mittig in dem Rohr 306b aus Pyrophyllit, das die Pillen beidseitig überragt. Oben und unten werden die Pillen je von aus zwei Deckelteilen 306d und 306c aus Pyrophyllit zusammengesetzten Stopfen, die in dem Rohr 306b sitzen, bündig abgeschlossen. Das Pyrophyllit ist ein natürliches Material, elektrisch isolierend, das Drucke sehr gut überträgt und sich auch bei den erforderlichen Drucken für das erfindungsgemäße Verfahren umschichtet. An das Pyrophyllitrohr 306b schließt sich nach außen ein Graphitrohr 304 an, das Heizung zur Erzeugung der gewünschten hohen Temperaturen bei entsprechender hoher Strombelastung dient. An das Graphitrohr 304 schließt sich wiederum nach außen ein Rohr 306a aus druckfestem elektrisch isolierendem Pyrophyllit an. Den äußeren Abschluß bildet dann ein dickwandiges Rohr 303 aus Pyrophyllit. Oberseitig und unterseitig ist dann der Hochdruckeinsatz abschließend mit Platten 301 b aus Molybden oder Stahl abgedeckt, die mit dem Graphitrohr 304 kontaktieren und als Stromzuleitung dienen. Den Abschluß bilden dann auf den Platten 301b aufliegende Deckel 300 mit Deckplatten 302 aus Sinterkorund $A12 O3$, die in Stahlringen 301 gefaßt sind und als Anlagefläche für die Preßstempel in der Presse dienen. Der Hochdruckeinsatz 30 mit in seiner Reaktionskammer eingebautem hBN sowie den Additiven, insbesondere den Kristallisationsinhibitoren und gegebenenfalls Lösungsmittelkatalysatoren ermöglicht, Druck und Temperatur in geeigneter Weise und geforderter Höhe dem Bornitrid im Inneren zuzuführen, um dieses bei entsprechend hohen Temperaturen und Drucken vollständig aufzuschmelzen und die Umwandlung zu dem amorphen Bornitrid aBN-2 zu ermöglichen. Die Ausgangsmaterialien für die Synthese sind dabei direkt allseitig von Pyrophyllit umgeben. Der Hochdruckeinsatz 30 wird dann in eine Hochdruckpresse eingebaut, siehe WO/90/02704, und mit 70 kbar Druck komprimiert. Über die in den Hochdruckeinsatz 30 eingebaute Graphitwiderstandsheizung 304 wird die Temperatur von 1850 °C erzeugt und die in dem Hochdruckeinsatz 30 eingeschlossenen Materialien eine Stunde bei diesen Bedingungen von Druck und Temperatur gehalten. Durch Abschalten der Heizquelle für den Hochdruckeinsatz werden die in der Reaktionskammer befindlichen aufgeschmolzenen Materialien abgeschreckt und anschließend wird die Druckentlastung durchgeführt und der auf dem Hochdruckeinsatz 30 lastende Druck auf Atmosphärendruck zurückgefahren. Die nun aus der Reaktionskammer erhaltene Masse, enthaltend Bornitrid, wird im Licht- und Elektronenmikroskop weiter untersucht. Hierbei wurden ein Anteil von 15 Vol.-% an amorphem ultrahartem Bornitrid aBN-2 festgestellt.

Beispiel 2:

Handelsüblich erhältliches hBN, Grade C spezial nachgewaschen, wurde mit 0,05 %iger Lösung von Kaliumpermanganat in aqua distilata versetzt und 24 Stunden bei Raumtemperatur getrocknet. Sodann wurden zwei Pillen der getrockneten Substanz mit 2,5 mm Höhe und 3 mm Durchmesser durch Pressen hergestellt. Diese Pillen wurden zusammen mit zwei Pillen von 0,5 mm Höhe und 1 mm Durchmesser aus reinem Magnesium in abwechselnder schichtweiser Anordnung in den Reaktionsraum des Hochdruckeinsatzes (30) gemäß Figur 5 eingesetzt. Nunmehr wurde wie in Beispiel 1 der Druck und die Temperatur aufgebaut und eine Stunde lang gehalten. Die abgeschreckte Masse wurde aus dem Reaktionsraum entnommen und auf ihre Umwandlungsrate und den Gehalt an amorphem ultrahartem Bornitrid aBN-2 untersucht. Hierbei wurden in der Reaktionsmasse 50 Vol.-% aBN-2 festgestellt, die erfindungsgemäß hergestellt wurden.

Beispiel 3:

Bei diesem Experiment wurden dünne Plättchen von 0,3 mm Höhe und 3 mm Durchmesser aus hBN, Mg3N2, Mg, Li2C03, MgO, KMn04 jeweils alternierend gestapelt in die Reaktionskammer des Hochdruckeinsatzes nach Figur 5 eingebracht. Danach wurden Druck und Temperatur, wie in Beispiel 1 erläutert, erzeugt und eine Stunde lang aufrechterhalten. Die Kontaktzonen des hBN mit den sauerstoffhaltigen Zusatzstoffen wurden hierbei einer deutlich stärkeren Amorphisierung unterzogen wie die Zonen der anderen Zusatzstoffe, die nicht als Kristallisationsinhibitor wirken. Diese Feststellung wurde durch Untersuchung in TEM und Lichtmikroskop gemacht.

Beispiel 4:

Es wurde eine Pille von 5 mm Höhe und 3 mm Durchmesser durch Vermischen von 80 Vol.-% hBN, Grade C spezial nachgewaschen, 10 Vol.-% Mg pur, 5 Vol.-% Mg3N2 pur, 4 Vol.-% H2O destilliert und 1 Vol.-% KMnO4 in einer Handpresse vorkompaktiert und in die Reaktionskammer des Hochdruckeinsatzes gemäß Figur 5 eingebracht. Im Anschluß daran wurde die Preßkraft auf den für die Durchführung des Verfahrens gewünschten Wert von 105 Tonnen aufgebracht. Die durch die Graphitwiderstandsheizung in dem Hochdruckeinsatz erzeugte Temperatur wurde langsam von 20 auf 1300°C während einer Zeit von 20 Minuten erhöht, dann 20 Minuten zwecks Calcinierung konstant bei 1300 °C belassen. Dann wurde die Temperatur in einer Zeit von 5 Minuten auf 1750 °C erhöht. Hierbei wurden Schwankungen in der Leistungsabgabe der Heizung im Bereich der Temperaturen von 1650 °C bemerkt, die auf reaktionäre Veränderungen in der Synthesemasse hindeuten, insbesondere auf eine Temperaturerhöhung, die zugleich anzeigt, daß die zur Amorphisierung des aufgeschmolzenen hBN nötigen Temperaturen im Inneren des Hochdruckeinsatzes, d.h. in der Reaktionskammer, erreicht worden sind.

Mit dem Aufbau und der Verfahrensdurchführung gemäß Beispiel 4 wurde ein Anteil von 20 Vol.-% an ultrahartem aBN-2 in der nachfolgend durch Abschreckung gewonnenen synthetisierten Masse festgestellt.

Beispiel 5:

In einen Zylinder aus vorkompaktiertem hBN gemäß Beispiel 1 von 5 mm Höhe und 3 mm Durchmesser wird zentrisch ein kompaktierter Zylinder von 2mm Höhe und 1 mm Durchmesser eingebaut, der aus 97 Vol.-% Mg, 2 Vol.-% Mg3N2, 1 Vol.-% KMnO4 besteht. Dieser wird in die Reaktionskammer des Hochdruckeinsatzes 30 gemäß Figur 5 gegeben und dann in die Hochdruckpresse eingesetzt und wie in Beispiel 4 erläutert, unter Druck und Temperatur gesetzt. Die veränderte Geometrie im Aufbau im Vergleich zum Beispiel 4 sorgt hier für eine bessere Umsetzung des hBN im Randbereich des Zylinders in aBN-2. Dieser Bereich liegt im unmittelbaren Strahlungsfeld der IR-Strahlung der Graphitwiderstandsheizung und ist eine Zone geringer Temperaturverluste.

Die Beispiele machen deutlich, daß zum Herstellen von aBN-2 durch Synthese und Umwandlung von hBN unter Zusatz von Kristallisationsinhibitoren und gegebenenfalls Lösungsmittelkatalysatoren sowohl durch die chemische Zusammensetzung der beteiligten Materialien, die gewählte Einbaugeometrie in der Reaktionskammer und die Heizungs- und Drucksteuerung und die Vorbehandlung der Ausgangsmaterialien beeinflußt werden kann.

An Stelle des in den Beispielen gewählten Kaliumpermanganats als Sauerstoffdonator sind auch H2O2 oder andere Peroxide geeignet. Jedoch zeigt sich, daß das Kalium zusätzlich eine Rolle als Transportelement für die Synthese spielt, d.h. beim Einwandern der durch die Kristallisationsinhibitoren gebildeten Reaktionsprodukte, wie beispielsweise bei den Sauerstoffdonatoren eines Borsuboxids und Einlagern derselben in die Kristallschichtstrukturen des Bornitrids.

Figur 6 zeigt eine TEM-Aufnahme bei extremer Vergrößerung von 250.000 fach von amorphem Bornitrid aBN-2, hergestellt nach Beispiel 2, wobei sich im Material Bornitrid selbst viele kleine sphärische Zentren bilden, in denen die Auflösung der hexagonalen Bornitridstruktur, d.h. der Kristallgitterschichtstruktur, beginnt.

In der Figur 7 ist das Gefüge von nach dem erfindungsgemäßen Verfahren erhaltenem aBN-2 mit Kaliumpermanganat als Kristallisationsinhibitor gemäß Beispiel 2 in einer lichtmikroskopischen im Phasenkonstrast dargestellten Aufnahme in 500facher Vergrößerung dargestellt.

Figur 6 und 7 zeigen insbesondere das Fehlen jeder symmetrischen Elemente, wie Kanten, Winkel, Holoeder, wie sie für kristalline Substanzen aus Bornitrid ja typisch sind. Figur 6 zeigt die Gefügeart, wie sie zum Beispiel für einen Werkzeugeinsatz ideal sein kann und beweist, daß selbst bei hoher Vergrößerung keine für Kristallkeime typischen Merkmale, wie oben angegeben, vorhanden sind.

In der Figur 8 sind verschiedene Einbaugeometrien für die Ausgangsmaterialien für die Synthese von ultrahartem amorphem Bornitrid nach dem erfindungsgemäßen Verfahren für die Reaktionskammer eines Hochdruckeinsatzes gemäß Figur 5 dargestellt. Hierbei zeigen die gepunkteten Bereiche die Anordnung von Kristallisationsinhibitoren, gegebenenfalls in Verbindung mit Katalysatoren, die schraffierten Bereiche, die Anordnung des hexagonalen oder turbostratischen Bornitrids als Ausgangsmaterial und die diffusen Bereiche, die Zonen in denen sich bevorzugt das amorphe ultraharte Bornitrid bildet.

In der Figur 9 ist eine Einbaugeometrie für die Ausgangsmaterialien in die Reaktionskammer eines Hochdruckeinsatzes dargestellt, die zu einer Ausbildung von ultrahartem Bornitrid in einem im wesentlichen sanduhrförmigen Bereich mit optimaler Ausbeute führt.

**Patentansprüche**

1.  Verfahren zum Herstellen eines amorphen ultraharten Materials auf Basis von Bornitrid mit einer zum Ritzen von Diamant ausreichenden Härte, ausgehend von hexagonalem oder turbostratischem Bornitrid, das bei Drucken von mindestens 70 kbar oder mehr komprimiert und auf Temperaturen von mindestens 1650 °C oder darüber erwärmt wird, bis eine Bornitridschmelze erhalten wird und die gebildete Bornitridschmelze durch Abstellen der Wärmezufuhr abgeschreckt wird und danach die Druckentlastung der abgeschreckten Bornitridschmelze durchgeführt wird, **dadurch gekennzeichnet**, daß das hexagonale oder turbostratische Bornitrid als Ausgangsmaterial in Gegenwart von Kristallisationsinhibitoren behandelt wird, die Ionen oder Moleküle freigeben, die mit dem als Ausgangsmaterial eingesetzten Bornitrid bei Drucken von mindestens 70 kbar und bei Temperaturen von mindestens 1650 °C reagieren und deren Reaktionsprodukte in die Kristallgitterschichten des Bornitrids eingebaut werden.

2.  Verfahren nach Anspruch 1,
    **dadurch gekennzeichnet**, daß als Kristallisationsinhibitoren Sauerstoff abgebende chemische Substanzen (Sauerstoffdonatoren) eingesetzt werden.

3.  Verfahren nach Anspruch 2,
    **dadurch gekennzeichnet**, daß die Sauerstoffdonatoren erst bei Erreichen einer Temperatur von mindestens 1200 °C wirksam werden und den Sauerstoff freigeben, der in die Bornitrid-Kristallgitterschichten eindringt und diese unter Ausbildung eines Borsuboxids vernetzt.

4.  Verfahren nach einem der Ansprüche 1 bis 3,
    **dadurch gekennzeichnet**, daß der Druck auf das als Ausgangsmaterial eingesetzte Bornitrid und die Kristallisationsinhibitoren bei steigender Temperatur erhöht wird.

5.  Verfahren nach einem der Ansprüche 1 bis 4,
    **dadurch gekennzeichnet**, daß der auf das als Ausgangsmaterial eingesetzte Bornitrid und die Kristallisationsinhibitoren einwirkende Druck und Temperatur ausreichend hoch sind, um eine Teilvernetzung der Bor- und Stickstoffatome der Bornitrid-Kristallgitterschichten untereinander zu bewirken.

6.  Verfahren nach einem der Ansprüche 1 bis 5,
    **dadurch gekennzeichnet**, daß bezogen auf 100 Gew.-% hBN mindestens 0,001 bis etwa 10 Gew.-% Kristallisationsinhibitoren, insbesondere Sauerstoff abgebende chemische Substanzen, eingesetzt werden.

**7.** Verfahren nach einem der Ansprüche 1 bis 6,
**dadurch gekennzeichnet**, daß als Sauerstoffdonatoren Peroxide eingesetzt werden.

**8.** Verfahren nach einem der Ansprüche 1 bis 6,
**dadurch gekennzeichnet**, daß als Sauerstoffdonatoren Alkali- und/oder Erdalkalimetalle enthaltende Verbindungen eingesetzt werden.

**9.** Verfahren nach Anspruch 8,
**dadurch gekennzeichnet**, daß Kaliumpermanganat, Lithiumcarbonat und/oder Magnesiumoxyd als Kristallisationsinhibitoren eingesetzt werden.

**10.** Verfahren nach einem der Ansprüche 1 bis 9,
**dadurch gekennzeichnet**, daß das als Ausgangsmaterial eingesetzte Bornitrid und Kristallisationsinhibitoren in Gegenwart eines Katalysators behandelt werden.

**11.** Verfahren nach Anspruch 10,
**dadurch gekennzeichnet**, daß katalytische Lösungsmittel auf Basis von Alkali- und Erdalkalimetallen und deren Nitriden, wie Lithium (Li), Magnesium (Mg), Calcium (Ca), Lithiumnitrid (Li3N), Magnesiumnitrid (Mg3N2) und Calciumnitrid (Ca3N2) eingesetzt werden.

**12.** Verfahren nach Anspruch 10 oder 11,
**dadurch gekennzeichnet**, daß, bezogen auf 100 Gew.-% Bornitrid als Ausgangsmaterial, etwa 1 bis 50 Gew.-% Katalysator eingesetzt werden.

**13.** Verfahren nach einem der Ansprüche 1 bis 12,
**dadurch gekennzeichnet**, daß das als Ausgangsmaterial eingesetzte Bornitrid und Kristallisationinhibitor sowie Lösungsmittelkatalysator entweder je für sich und/oder in Mischungen zu gleichen und/oder verschiedenen Formteilen gepreßt werden und eine oder mehrere Formteile gleicher und/oder unterschiedlicher Zusammensetzung in eine Reaktionskammer eingebracht werden, in der sie den Verfahrensparametern Druck und Temperatur unterworfen werden.

**14.** Verfahren nach Anspruch 13,
**dadurch gekennzeichnet**, daß die Ausgangsmaterialien in einer von Pyrophyllit begrenzten Reaktionskammer behandelt werden.

**15.** Amorphes ultrahartes Material auf Basis von Bornitrid mit einer zum Ritzen von Diamant ausreichenden Härte,
**gekennzeichnet durch** in die Kristallgitterstruktur des Bornitrids unter Ausbildung einer elektronenstrahl- und röntgenamorphen Struktur eingelagerte Reaktionsprodukte von Bornitrid mit Kristallisationsinhibitoren.

**16.** Amorphes ultrahartes Material gemäß Anspruch 15,
**dadurch gekennzeichnet**, daß als Reaktionsprodukte Borsuboxide eingelagert sind.

**17.** Amorphes ultrahartes Material gemäß Anspruch 15 oder 16,
**dadurch gekennzeichnet**, daß die elektronenstrahl- und röntgenamorphe Struktur des die eingelagerten Reaktionsprodukte enthaltenden Bornitrids vernetzt ist.

## Claims

**1.** Process for preparing an amorphous ultrahard material based on boron nitride and having a hardness sufficient to scratch diamond, starting from hexagonal or turbostratic boron nitride, which is compressed at pressures of at least 70 kbar or above and heated to temperatures of at least 1650°C or above, until a boron nitride melt is obtained, and the boron nitride melt formed is quenched by shutting off the heat supply, and the quenched boron nitride melt is then relieved of the pressure, **characterised in that** the hexagonal or turbostratic boron nitride as the starting material is treated in the presence of crystallisation inhibitors , which release ions or molecules which react with the boron nitride used as the starting material at pressures of at least 70 kbar and at temperatures of at least 1650°C, and whose reaction products are incorporated into the crystal lattice layers of the boron nitride.

**2.** Process according to Claim 1, **characterised in that** the crystallisation inhibitors used are chemical substances which give off oxygen (oxygen donors).

**3.** Process according to Claim 2, **characterised in that** the oxygen donors only become active on reaching a temperature of at least 1200°C and release the oxygen which penetrates into the boron nitride crystal lattice layers and crosslinks these with the formation of a boron suboxide.

**4.** Process according to one of Claims 1 to 3, **characterised in that** the pressure on the boron nitride used as the starting material and the crystallisation inhibitors is increased with rising temperature.

**5.** Process according to one of Claims 1 to 4, **characterised in that** the pressure and temperature acting on the boron nitride used as the starting material and on the crystallisation inhibitors are sufficiently high to effect partial mutual crosslinking of the boron and nitrogen atoms of the boron nitride crystal lattice layers.

**6.** Process according to one of Claims 1 to 5, **characterised in that**, based on 100% by weight of hBN, from at least 0.001 to approximately 10% by weight of crystallisation inhibitors, especially chemical substances giving off oxygen, are used.

**7.** Process according to one of Claims 1 to 6, **characterised in that** the oxygen donors used are peroxides.

**8.** Process according to one of Claims 1 to 6, **characterised in that** the oxygen donors used are compounds containing alkali metals and/or alkaline earth metals.

**9.** Process according to Claim 8, **characterised in that** the crystallisation inhibitors used are potassium permanganate, lithium carbonate and/or magnesium oxide.

**10.** Process according to one of Claims 1 to 9, **characterised in that** the boron nitride used as the starting material and the crystallisation inhibitors are treated in the presence of a catalyst.

**11.** Process according to Claim 10, **characterised in that** catalytic solvents based on alkali metals and alkaline earth metals and the nitrides thereof, such as lithium (Li), magnesium (Mg), calcium (Ca), lithium nitride ($Li_3N$), magnesium nitride ($Mg_3N_2$) and calcium nitride ($Ca_3N_2$), are used.

**12.** Process according to Claim 10 or 11, **characterised in that**, based on 100% by weight of boron nitride as the starting material, from approximately 1 to 50% by weight of catalyst are used.

**13.** Process according to one of Claims 1 to 12, **characterised in that** the boron nitride used as the starting material and the crystallisation inhibitor as well as the solvent catalyst are compression-moulded, either on their own and/or in mixtures, into identical and/or different mouldings, and one or more mouldings of identical and/or different composition are loaded into a reaction chamber, in which they are subjected to the process parameters of pressure and temperature.

**14.** Process according to claim 13, **characterised in that** the starting materials are treated in a reaction chamber bounded by pyrophyllite.

**15.** Amorphous ultrahard material based on boron nitride and having a hardness sufficient to scratch diamond, **characterised by** reaction products of boron nitride with crystallisation inhibitors, which reaction products are incorporated into the crystal lattice structure of the boron nitride to form a structure which is amorphous with respect to electron beams and X-rays.

**16.** Amorphous ultrahard material according to Claim 15, **characterised in that** boron suboxides are incorporated as the reaction products.

**17.** Amorphous ultrahard material according to Claim 15 or 16, **characterised in that** the structure, amorphous with respect to electron beams and X-rays, of the boron nitride containing the incorporated reaction products is crosslinked.

**Revendications**

1. Procédé pour la préparation d'une matière amorphe ultradure à base de nitrure de bore, dont la dureté est suffisante pour rayer le diamant, à partir de nitrure de bore hexagonal ou turbostratique, que l'on comprime sous des pressions d'au moins 70 kbar ou plus et que l'on réchauffe à des températures d'au moins 1650°C ou plus jusqu'à ce que l'on obtienne une masse fondue de nitrure de bore, et on étire la masse fondue de nitrure de bore obtenue en supprimant l'apport de chaleur, puis on procède à la détente de la pression de la masse fondue de nitrure de bore étirée, caractérisé en ce qu'on traite le nitrure de bore hexagonal ou turbostratique à titre de matière de départ en présence d'inhibiteurs de la cristallisation qui libèrent des ions ou des molécules qui réagissent avec le nitrure de bore mis en oeuvre comme matière de départ sous des pressions d'au moins 70 kbar et à des températures d'au moins 1650°C, et dont on incorpore les produits réactionnels dans les couches du réseau cristallin du nitrure de bore.

2. Procédé selon la revendication 1, caractérisé en ce qu'on met en oeuvre, comme inhibiteurs de la cristallisation, des substances chimiques cédant de l'oxygène (donneurs d'oxygène).

3. Procédé selon la revendication 2, caractérisé en ce que les donneurs d'oxygène ne deviennent actifs et ne libèrent l'oxygène qu'après avoir atteint une température d'au moins 1200°C, l'oxygène pénétrant dans les couches du réseau cristallin du nitrure de bore et réticulant ces dernières en formant un hypoxyde de bore.

4. Procédé selon l'une quelconque des revendications 1 à 3, caractérisé en ce qu'on augmente la pression s'exerçant sur le nitrure de bore mis en oeuvre comme matière de départ et sur les inhibiteurs de la cristallisation de manière conjointe à une élévation de la température.

5. Procédé selon l'une quelconque des revendications 1 à 4, caractérisé en ce que la pression et la température s'exerçant sur le nitrure de bore mis en oeuvre comme matière de départ et sur les inhibiteurs de la cristallisation sont suffisamment élevées pour provoquer une réticulation partielle mutuelle des atomes de bore et des atomes d'azote des couches du réseau cristallin du nitrure de bore.

6. Procédé selon l'une quelconque des revendications 1 à 5, caractérisé en ce que, rapporté à 100% en poids de hBN, on met en oeuvre les inhibiteurs de la cristallisation, en particulier les substances chimiques cédant de l'oxygène à concurrence d'au moins 0,001 à environ 10% en poids.

7. Procédé selon l'une quelconque des revendications 1 à 6, caractérisé en ce qu'on met en oeuvre, comme donneurs d'oxygène, des peroxydes.

8. Procédé selon l'une quelconque des revendications 1 à 6, caractérisé en ce qu'on met en oeuvre, comme donneurs d'oxygène, des composés contenant des métaux alcalins et/ou alcalino-terreux.

9. Procédé selon la revendication 8, caractérisé en ce qu'on met en oeuvre du permanganate de potassium, du carbonate de lithium et/ou de l'oxyde de magnésium comme inhibiteurs de la cristallisation.

10. Procédé selon l'une quelconque des revendications 1 à 9, caractérisé en ce qu'on traite le nitrure de bore mis en oeuvre comme matière de départ et les inhibiteurs de la cristallisation en présence d'un catalyseur.

11. Procédé selon la revendication 10, caractérisé en ce qu'on met en oeuvre des solvants catalytiques à base de métaux alcalins et alcalino-terreux et de leurs nitrures, tels que le lithium (Li), le magnésium (Mg), le calcium (Ca), le nitrure de lithium ($Li_3N$), le nitrure de magnésium ($Mg_3N_2$) et le nitrure de calcium ($Ca_3N_2$).

12. Procédé selon la revendication 10 ou 11, caractérisé en ce que, rapportés à 100% en poids de nitrure de bore comme matière de départ, on met en oeuvre le catalyseur à concurrence d'environ 1 à 50% en poids.

13. Procédé selon l'une quelconque des revendications 1 à 12, caractérisé en ce qu'on comprime le nitrure de bore mis en oeuvre comme matière de départ et l'inhibiteur de la cristallisation, ainsi que le solvant faisant office de catalyseur, respectivement en soi et/ou en mélanges pour obtenir des corps moulés identiques et/ou différents, et on introduit un ou plusieurs éléments moulés de composition identique et/ou différente dans une chambre de réaction dans laquelle on les soumet aux paramètres opératoires de pression et de température.

**14.** Procédé selon la revendication 13, caractérisé en ce qu'on traite les matières de départ dans une chambre de réaction délimitée par de la pyrophyllite.

**15.** Matière amorphe ultradure à base de nitrure de bore, dont la dureté est suffisante pour rayer le diamant, caractérisée par des produits réactionnels de nitrure de bore avec des inhibiteurs de la cristallisation incorporés dans la structure du réseau cristallin du nitrure de bore pour obtenir une structure amorphe vis-à-vis des faisceaux électroniques et des rayons X.

**16.** Matière amorphe ultradure selon la revendication 15, caractérisée en ce qu'on incorpore des hypoxydes de bore comme produits réactionnels.

**17.** Matière amorphe ultradure selon la revendication 15 ou 16, caractérisée en ce que la structure amorphe vis-à-vis des faisceaux électroniques et des rayons X du nitrure de bore contenant les produits réactionnels incorporés est réticulée.

Fig. 3

cBN

Fig. 2

wBN

Fig. 4

B₂O₃₋ₓ

$B_2O_{3-x}$

aBN-2

Fig. 1

hBN

Fig. 5

301    302    X    30

300

301b

303

304

P3

306a

306b

306c

306d

P1

P2

Y

300

Fig. 6

13

Fig. 7

Fig. 8

1    2    3    4    5

▓ = aBN-2

▨ = hBN

☐ = Additiv

Fig. 9